# EUROPÄISCHE PATENTSCHRIFT

(11) **EP 3 587 108 B1**
(45) Veröffentlichungstag und Bekanntmachung des Hinweises auf die Patenterteilung: **09.08.2023**
(21) Anmeldenummer: 18180107.7
(22) Anmeldetag: 27.06.2018
(51) Int. Cl.: B32B 37/12, B32B 5/02, B32B 7/12, B32B 9/02, B32B 15/10, B32B 19/04, B32B 21/02, B32B 27/30, B27N 7/00

(54) **KASCHIERTE SANDWICHPLATTE**
COATED SANDWICH PANEL
PANNEAU SANDWICH CONTRECOLLÉ

(43) Veröffentlichungstag der Anmeldung: 01.01.2020
(73) Patentinhaber: SWISS KRONO Tec AG, 6004 Luzern (CH)
(72) Erfinder: STEINMANN, Pius, 6247 Schötz (CH); HENKE, Kristin, 6018 Buttisholz (CH)
(74) Vertreter: Kalkoff & Partner Patentanwälte mbB

(56) Entgegenhaltungen:
- EP-A1- 2 574 455
- EP-A1- 2 873 522
- EP-A1- 2 987 632
- WO-A1-2009/135323

## Beschreibung

Die Erfindung betrifft eine Verbundplatte aus Holzwerkstoff, die einen möglichst hohen Biege-E-Modul aufweisen soll. Gleichzeitig soll die Verbundplatte einfach herstellbar sein.

Die EP 2 987 632 A1 beschreibt eine Verbundplatte mit guten Festigkeitseigenschaften. Die Herstellung dieser Platte erfordert jedoch lange Presszeiten, so dass die Herstellung der Platte sehr aufwändig ist. Weitere Verbundplatten sind bekannt aus der EP 2 873 522 A1, der EP 2 574 455 A1 und der WO 2009/135323 A1.

Es ist daher Aufgabe der Erfindung, eine Verbundplatte mit hohem Biege-E-Modul auf einfache Weise, insbesondere mit kürzeren Presszeiten herzustellen.

Die Lösung der Aufgabe wird durch eine Verbundplatte nach Anspruch 1 gewährleistet.

Die Erfindung betrifft eine Verbundplatte aus Holzwerkstoff mit einer Mittellage aus Spanplatte und einer Faserplatte oder einer Schichtstoffplatte als Außenlage sowie mit einem zwischen Mittellage und Außenlage angeordneten kunstharzgetränkten Papier, so wie sie aus der EP 2 987 632 A1 bekannt ist. Es hat sich herausgestellt, dass das gemeinsame Verpressen von Mittellage, kunstharzgetränktem Papier und Außenlage lange Presszeiten erfordert, weil die Außenlage das Aushärten des Kunstharzes verzögert hat. Dieser Nachteil kann erfindungsgemäß vermieden werden, wenn zwischen dem kunstharzgetränkten Papier und der Außenlage eine Schicht Klebstoff angeordnet ist. Das Aushärten des Kunstharzes im kunstharzgetränkten Papier und damit das Verbinden der Mittellage mit dem kunstharzgetränkten Papier erfolgt wesentlich schneller, wenn die Mittellage und das kunstharzgetränkte Papier ohne die Außenlage verpresst werden. Es hat sich überraschend herausgestellt, dass kein nennenswerter Verlust am Biege-E-Modul festzustellen ist, wenn die Außenlage nicht durch das kunstharzgetränkte Papier an der Verbundplatte fixiert ist, sondern wenn die Außenlage mittels einer auf die Verbundplatte aufgetragenen Schicht aus Klebstoff kaschiert wird. Die Schicht aus Klebstoff wird entweder auf die Außenseite des kunstharzgetränkten Papiers oder auf die dem Papier zugewandte Seite der Außenlage aufgetragen und dadurch wird die Außenlage auf dem Verbund aus Mittellage und kunstharzgetränktem Papier fixiert.

Das kunstharzgetränkte Papier besteht aus einer Papierbahn, meist mit den Abmessungen der zu verbindenden Mittellage oder Außenlage, wobei die Papierbahn mit einem flüssigen Kunstharz getränkt und anschließend getrocknet wird. Die Papierbahn selbst als Rohpapier ohne Kunstharz weist bevorzugt ein Flächengewicht von 15 g/m² bis 100 g/m 2 auf. Das Papier ist aus wirtschaftlichen Gründen vorzugweise ungefärbt und unbedruckt, da das Papier nach dem Aufbringen der Außenlage nicht mehr sichtbar ist. Das Kunstharz, das zum Tränken der Platte eingesetzt wird, ist bevorzugt ausgewählt aus der Gruppe, die umfasst: Harnstoff, Melamin, Phenol, Epoxidharz sowie deren Mischungen und Derivate. Das Kunstharz wird nach dem Tränken des Papiers getrocknet, aber nicht ausgehärtet. Das Aushärten erfolgt erst, wenn das Papier durch Verpressen mit der Mittellage verbunden wird. Pro Seite der Mittellage wird vorteilhaft eine Bahn kunstharzgetränktes Papier mit einem Flächengewicht von 80 g/m 2 bis 300 g/m 2 eingesetzt.

Nach einer vorteilhaften Ausführung der Erfindung wird mehr als ein kunstharzgetränktes Papier auf die Mittellage gelegt. Mehrere Bahnen des kunstharzgetränkten Papiers können jeweils einzeln mit der Mittellage verpresst werden, so dass für jede Bahn ein gesonderter Pressgang erforderlich ist. Es wird jedoch bevorzugt, wenn sämtliche Bahnen, die mit der Mittellage verpresst werden sollen, mit der Mittellage zu einem Pressgutstapel gefügt und in einem Pressgang verpresst werden. Diese Alternative ist zeit- und energiesparend. Das Aufbringen mehrerer mit Kunstharz getränkter Papierbahnen kann zu einem höheren Biege-E-Modul führen, weil jede Papierbahn eine eigene Lage Fasern einbringt, die ein Durchbiegen der Verbundplatte insbesondere senkrecht zur Plattenebene reduzieren. Werden mehrere Bahnen kunstharzgetränktes Papier auf einer Seite der Mittellage eingesetzt, so beträgt das Flächengewicht aller Bahnen auf einer Seite der Mittellage zusammen bevorzugt 200 g/m² bis 300 g/m².

Nach einer besonders bevorzugten Ausführung der Erfindung wird die Mittellage auf beiden Seiten mit mindestens einem kunstharzgetränkten Papier verpresst und nachfolgend wird auf beiden Seiten eine Außenlage aus Faserplatte oder aus einer Schichtstoffplatte mittels einer Schicht Klebstoff auf das kunstharzgetränkte Papier aufkaschiert. Dabei wird bevorzugt, wenn auf beiden Seiten der Mittellage ein symmetrischer Aufbau aus kunstharzgetränktem Papier hergestellt wird. Es ist aber auch möglich, unterschiedliche Papiere auf beiden Seiten der Mittellage aufzubringen.

Der erfindungsgemäß zum Fixieren der Außenlage eingesetzte Klebstoff ist erfindungsgemäß ein Schmelzklebstoff, der beim Auftragen keine zusätzliche Feuchtigkeit in die Verbundplatte einbringt. Bevorzugt handelt es sich um einen Polyurethanklebstoff oder um einen Ethylenvinylklebstoff. Zum sicheren Fixieren der Außenlage auf dem kunstharzgetränkten Papier werden bevorzugt 20 g/m² bis 200 g/m² Klebstoff als Schicht aufgetragen. Die Schicht aus Klebstoff kann sich vollflächig über die gesamte Seite des kunstharzgetränkten Papiers oder der Außenlage erstrecken, es kann aber auch nur abschnittsweise Klebstoff aufgetragen werden, der z. B. punkt, gitter- oder streifenförmig verteilt ist. Der Klebstoff wird, insbesondere wenn Schmelzkleber eingesetzt wird, mit erhöhter Temperatur aufgetragen und vor dem Abkühlen mit der Außenlage und dem kunstharzgetränkten Papier verbunden.

Die Mittellage der erfindungsgemäßen Verbundplatte ist eine Spanplatte. Dazu zählen auch Oriented-Strand-Board-Platten (OSB-Platten), die sich durch hohe Biegefestigkeit bzw. einen hohen Biege-E-Modul auszeichnen. Die Späne der Spanplatte sind mit einem Kunstharz gebunden. Das Kunstharz des kunstharzgetränkten Papiers kann identisch mit dem Kunstharz der Spanplatte sein, es kann aber auch ein anderes Kunstharz sein, das dann bevorzugt mit der Spanplatte gut aushärtet, so dass eine hochfeste Bindung entsteht. Als Außenlage wird eine Faserplatte eingesetzt, dies kann eine mitteldichte Faserplatte (MDF-Platte) oder eine hochdichte Faserplatte (HDF-Platte), insbesondere eine Compact-Density-Fiberboard-Platte (CFD-Platte) sein, die meist an der schwarzen Einfärbung zu erkennen ist. Alternativ kann eine Schichtstoffplatte als Außenlage eingesetzt werden. Schichtstoffplatten sind ein Verbundwerkstoff, der aus Papier und Kunstharz hergestellt ist und der als High Pressure Laminate (HPL) und als Continuous Pressure Laminate (CPL) gehandelt wird. Die Oberfläche der Schichtstoffplatte besteht in der Regel aus einer Schicht Kunstharz, das häufig mit Korundpartikeln versehen ist, um die Kratzfestigkeit zu verbessern.

Um die Vorteile der erfindungsgemäßen Verbundplatte zu realisieren, genügt es nach einer einfachen Ausführung, wenn das Papier mit Kunstharz getränkt wird. Ein Additiv, das dem Papier oder dem Kunstharz jedoch vorteilhaft beigegeben werden kann, ist eine Substanz, die das Entflammen oder das Brennen der Verbundplatte erschwert oder verhindert. Solche Substanzen sind an sich bekannt, es handelt sich häufig um Borverbindungen. Da das kunstharzgetränkte Papier nahe der Oberfläche der Verbundplatte angeordnet ist, kann es das Brennen der Verbundplatte wirksam verhindern. Additive, die bekannten kunstharzgetränkten Papieren üblicherweise beigegeben werden, wie zum Beispiel Korund, sind zur Herstellung einer Verbundplatte aus Holzwerkstoff mit verbesserten Festigkeitseigenschaften nicht erforderlich. Sie können aus Gründen der Wirtschaftlichkeit ohne weiteres eingespart werden.

Als vorteilhaft ist hinsichtlich des Herstellungsverfahrens der erfindungsgemäßen Verbundplatte anzusehen, dass ein Pressgut-Stapel aus einer Mittellage sowie mindestens einem kunstharzgetränkten Papier in einer üblichen Kurztakt-Presse (KT-Presse) zu einer Verbundplatte verpresst werden kann. KT-Pressen sind übliche Betriebsausstattung zur Herstellung von laminierten Produkten oder Verbundplatten. Der Einsatz aufwändiger Beleimvorrichtungen entfällt. Beim Verpressen von Mittellage und kunstharzgetränktem Papier zeigt sich ein wesentlicher Vorteil der erfindungsgemäßen Verbundplatte. Während die aus der EP 2 987 632 A1 bekannte Verbundplatte eine Presszeit von ca. 300 Sekunden benötigt, genügen für den erfindungsgemäßen Pressgutstapel 30 Sekunden bis 50 Sekunden Presszeit. Damit wird die limitierte Kapazität der Presse, insbesondere der KT-Presse, durch die Verbundplatte nach der Erfindung weitaus besser genutzt, weil der einzelne Pressvorgang eine um 80 % bis 90 % geringere Presszeit aufweist.

Die Mittellage wird bevorzugt mit mindestens einem kunstharzgetränkten Papier verbunden. Vorteilhaft weist der Pressgutstapel mindestens ein kunstharzgetränktes Papier auf jeder Seite der Mittellage auf. Weiter bevorzugt sind auf mindestens einer Seite der Mittellage zwei oder mehr Bahnen kunstharzgetränkten Papiers angeordnet. Der Pressgut-Stapel wird z. B. mit üblichen Hilfsmitteln (Stapelgeräte, Trays, Klemmen) zusammengestellt und fixiert und in die KT-Presse verbracht. Dort wird der Pressgutstapel zwischen erhitzten Pressblechen verpresst. Während des Pressvorgangs verflüssigt sich das Kunstharz und härtet dann aus. Das Papier wird durch das Verflüssigen und Aushärten des Kunstharzes nicht beschädigt. Es bleibt eingebettet in der ausgehärteten Kunstharzschicht und nimmt im Gebrauch insbesondere Zugbelastungen auf, die auf den Randbereich der erfindungsgemäßen Verbundplatte einwirken.

Nach dem Verpressen des Pressgutstapels aus Mittellage und kunstharzgetränktem Papier wird die Außenlage mittels einer Schicht aus Klebstoff aufkaschiert. Die Schicht aus Klebstoff wird auf die Außenlage oder das kunstharzgetränkte Papier oder auf beide Bestandteile der Verbundplatte aufgetragen. Dann wird die Außenlage auf die Mittellage mit dem darauf verpressten, kunstharzgetränkten Papier gelegt und die Außenlage wird auf die Mittellage mit dem kunstharzgetränkten Papier kaschiert. Üblicherweise erfolgt das Kaschieren mittels eines Kalanders, bei dem die Außenlage zwischen zwei Walzen mittels der Schicht aus Klebstoff mit dem kunstharzgetränkten, auf der Mittellage ausgehärteten Papier verbunden wird.

Die erfindungsgemäße Verbundplatte aus Holzwerkstoff weist im Vergleich mit der aus der EP 2 987 632 A1 bekannten Verbundplatte aus Holzwerkstoff unverändert gute Festigkeitseigenschaften auf. Die guten Festigkeitseigenschaften werden also offenbar wesentlich durch die feste Verbindung zwischen der Mittellage und dem kunstharzgetränkten Papier bewirkt, das Aufkaschieren der Außenlage mittels einer Schicht aus Klebstoff mindert die Festigkeitseigenschaften, insbesondere das Biegeverhalten der erfindungsgemäßen Verbundplatte, nicht wesentlich.

Die Mittellage mit dem darauf verpressten kunstharzgetränkten Papier weist außergewöhnlich gute Festigkeitseigenschaften auf, insbesondere deshalb, weil im Randbereich der Verbundplatte das kunstharzgetränkte Papier in erheblichem Maße zur Festigkeit der Verbundplatte beiträgt. Die nachfolgend mittels einer Schicht aus Klebstoff aufkaschierte Außenlage aus Faserplatte beeinflusst die Festigkeitseigenschaften der erfindungsgemäßen Verbundplatte nicht wesentlich.

Die Faserplatte als Außenlage weist in der Regel eine einfache Oberfläche ohne Dekor auf. Nach einer bevorzugten Weiterbildung der Erfindung können die Außenseiten, also die nach außen weisenden Oberflächen der Außenlage, daher mit einer weiteren ein- oder mehrlagigen Beschichtung versehen sein. Als weitere Beschichtung auf der Außenseite mindestens einer Außenlage ist eine Beschichtung aus der Gruppe aufgebracht, die, einzeln oder in Kombination, umfasst: Farbe, Lack, Hochdrucklaminat, Furnier, Papier, Karton, Tapete, Folie, Textilien, Stoff, Filz, Vinyl, Leder, Kork, Stein, Metalle, Metallfolien, Kunststoffbeschichtungen, Polypropylen-, Polyethylen- oder Polyvinylacetatbeschichtungen, keramische Beschichtungen, Kacheln, Keramik-Kunstharzgemische, Glas, beschreibbare Folien, magnetische Beschichtungen, strahlungshemmende Folien oder Platten, mineralische Gewebe, organische, anorganische und synthetische Fasern. Die weitere Beschichtung kann auf beliebige Weise aufgebracht werden, z. B. durch Kleben, Heften oder Schweißen. Eine Schichtstoffplatte als Außenlage kann ebenfalls auf der der Mittellage abgewandten Außenseite ein Dekor aufweisen, aber es kann auch mindestens eine der vorstehend genannten Beschichtungen auf die Außenseite der Schichtstoffplatte aufgebracht sein.

Details der Erfindung werden im Folgenden anhand eines Ausführungsbeispiels näher erläutert. Es zeigen:

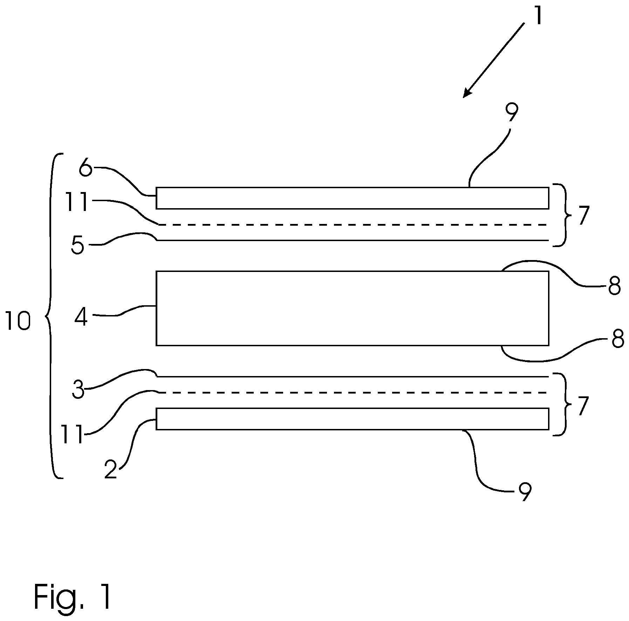

Figur 1 eine schematische Darstellung des Aufbaus einer bevorzugten Ausführung der erfindungsgemäßen Verbundplatte aus Holzwerkstoff

Figur 1 zeigt in schematischer Darstellung die Schichten einer bevorzugten Ausführung der erfindungsgemäßen Verbundplatte 1 aus Holzwerkstoff mit einer unteren Außenlage 2, einem unteren kunstharzgetränkten Papier 3, einer Mittellage 4, einem oberen kunstharzgetränkten Papier 5 und einer oberen Außenlage 6 am Beispiel eines Pressgut-Stapels 10. Zwischen dem oberen und dem unteren kunstharzgetränkten Papier 3,5 und der oberen bzw. unteren Außenlage 2, 6 ist jeweils eine Schicht 11 aus Klebstoff angeordnet, mittels derer die Außenlagen 2, 6 auf das jeweils angrenzende kunstharzgetränkte Papier 3,5 aufkaschiert sind. Die untere und die obere Außenlage bestehen bei dem in Figur 1 dargestellten Ausführungsbeispiel aus 2,9 mm starker HDF-Platte.

Unabhängig vom Ausführungsbeispiel ist jedoch festzuhalten, dass Material und Stärke der Außenlagen unabhängig voneinander gewählt werden können. Die untere und die obere Außenlage können also eine unterschiedliche Stärke aufweisen. Sie können auch aus unterschiedlichem Material, z. B. aus Faser- oder Schichtstoffplatten gewählt werden.

Die Mittellage 4 besteht bei dem vorliegenden Ausführungsbeispiel aus einer 13 mm starken Spanplatte. Zwischen den unteren und oberen Außenlagen 2, 6 und der Mittellage 4 ist jeweils ein unteres bzw. oberes kunstharzgetränktes Papier 3, 5 angeordnet. Alternativ können auch mehrere Bahnen kunstharzgetränkter Papiere auf einer oder mehreren Seiten der Mittellagen eingesetzt werden.

Das kunstharzgetränkte Papier ist hergestellt aus einem Rohpapier mit einem Blattgewicht von 27 g/m ² vor der Imprägnierung mit Kunstharz. Nach der Imprägnierung mit Kunstharz, hier: Harnstoff-Melamin, beträgt das Flächengewicht des Papiers 165 g/m ². Das Papier weist beim Verpressen mit den Außenlagen 2, 6 eine Feuchtigkeit von 7 % auf. Dieser Feuchtigkeitsgehalt entspricht in etwa der Restfeuchte der Außenlagen 2, 6 und der Mittellage 4, so dass während des Verpressens keine zusätzliche Feuchtigkeit in die Holzwerkstoffplatten der Außenlagen 2, 6 und der Mittellage 4 eingetragen wird. Der in Figur 1 dargestellte Pressgut-Stapel 10 wird in einer KT-Presse, deren Pressbleche auf 150 ° Celsius aufgeheizt sind, für 30 Sekunden verpresst. In dieser Zeit schmilzt das Kunstharz auf und härtet aus, wodurch eine feste Bindung an die Mittellage entsteht.

Anschließend wird eine Schicht 11 aus Klebstoff, hier EVA, in einer Menge von 80 g/m² aufgetragen. Auf die Schicht 11 aus Klebstoff wird die Außenlage 2, 6 aufgelegt und die Außenlage 2, 6 wird bei einer Temperatur von 40 °C und einem Druck von 20 N/mm² bis 110 N/mm², bevorzugt von 30 N/mm² bis 80 N/mm² mittels eines Kalanders auf das auf der Mittellage verpresste, kunstharzgetränkte Papier 3,5 aufkaschiert. Es erweist sich als vorteilhaft, dass durch die Verwendung eines Schmelzklebers der Eintrag von Flüssigkeit vermieden wird. Das Kaschieren mittels eines Kalanders erfolgt meist im Durchlaufverfahren, bei dem die zu verbindenden Elemente unter Druck zwischen zwei Walzen durchgeführt werden. Die Produktionsgeschwindigkeit beträgt üblicherweise von 20 m/min bis 24 m/min. Diese Herstellung der Verbundplatte in zwei Schritten erweist sich als zeit- und energiesparend.

Am Ende des Press- und Kaschiervorgangs ist eine Verbundplatte aus Holzwerkstoff mit einer Plattenstärke von insgesamt ca. 19 mm und einer mittleren Rohdichte gemäß EN 323 von 809 kg/m³ entstanden, für die folgende Festigkeitswerte gemessen wurden:

| | |
|---|---|
| Querzugfestigkeit (gemessen gemäß EN 319): | 0,72 N/mm² (0,50 N/mm²) |
| Biegefestigkeit (gemessen gemäß EN 310): | 32 N/mm² (25 N/mm²) |
| Abhebefestigkeit (gemessen gemäß EN 311): | 1,35 N/mm² (0,8 N/mm²) |

Die in Klammern hinter den Messwerten für die erfindungsgemäße Verbundplatte angegebenen Werte sind Festigkeitswerte, die für die Pfleiderer - PremiumBoard MFP Hybrid-Platte mit einer Schichtstärke von 19 mm und einer mittleren Rohdichte von 770 kg/m³ angegeben sind (Pfleiderer, Prospekt PremiumBoard MFP Hybrid, veröffentlicht 10/2013).

Die gegenüber dem Stand der Technik im wesentlichen unveränderten Festigkeitswerte der erfindungsgemäßen Verbundplatte 1 aus Holzwerkstoff sind möglicherweise wesentlich auf Verbesserungen im Randbereich 7 der Verbundplatte zurückzuführen, der sich aus dem kunstharzgetränkten Papier 3, 5, der Schicht aus Klebstoff 11 und einer Außenlage 2, 6 zusammensetzt; der sich also - alternativ formuliert - von der Oberfläche 8 der Mittellage 4 bis zur Außenseite 9 einer Außenlage 2, 6 erstreckt.

Bei der erfindungsgemäßen Verbundplatte 1 weist zum einen das verwendete Kunstharz des kunstharzgetränkten Papiers 3, 5 sehr gute Festigkeitseigenschaften auf, weil es durch das Verpressen in der KT-Presse auch mechanisch sehr gut an der Oberfläche der Mittellage 4 verankert ist. Zum anderen ist das in das Kunstharz eingebettete Papier auch nach dem Verpressen des Pressgut-Stapels uneingeschränkt intakt und das Fasergeflecht der Papierbahn ist eine zusätzliche Komponente der erfindungsgemäßen Verbundplatte 1, die geeignet ist, Zugkräfte aufzunehmen.

Im Randbereich 7 der erfindungsgemäßen Verbundplatte 1 treten bei von außen einwirkenden Druck- oder Zugkräften jeweils in dem zugbelasteten Randbereich der Verbundplatte 1 Zugkräfte auf. Die Aufnahme dieser Zugkräfte war bisher limitiert durch die Festigkeit der Leimfuge zwischen der Mittellage und einer Außenlage bekannter Verbundplatten aus Holzwerkstoff. Bei der erfindungsgemäßen Verbundplatte 1 ist nicht nur das Kunstharz in der Lage, hohe Zugkräfte aufzunehmen. Insbesondere auch die Fasern des Papiers 3, 5 sind in der Lage, hohe Zugkräfte aufzunehmen. Das untere und das obere kunstharzgetränkte Papier 3,5 wirkt insofern vergleichbar einem Zugstab, der im Randbereich 7 der Verbundplatte 1 angebracht ist. Die Tatsache, dass die Außenlage 2, 6 lediglich kaschiert und daher nur mittels Klebstoff mit dem kunstharzgetränkten Papier verbunden ist, ändert nichts an den im wesentlichen gleichen Festigkeitseigenschaften der erfindungsgemäßen Verbundplatte verglichen mit der Verbundplatte nach dem Stand der Technik.

Unabhängig vom vorliegenden Ausführungsbeispiel ist anzumerken, dass das kunstharzgetränkte Papier in Verbindung mit der Schicht aus Klebstoff gegenüber dem bisher bekannten und üblichen Leimauftrag auf Außenlage und/oder Mittellage oder auch dem kunstharzgetränkten Papier allein den Vorteil aufweist, dass die Kombination aus kunstharzgetränktem Papier und der Schicht aus Klebstoff Unebenheiten der Oberflächen von Außenlage und Mittellage noch besser ausgleichen kann, so dass Schwachstellen in der Verbindung von Außenlage und Mittellage weitgehend ausgeschlossen sind, und dass eine Verbundplatte bereitgestellt wird, die eine gute Dimensionsstabilität und ebene Außenseiten aufweist.

## Patentansprüche

1. Verbundplatte aus Holzwerkstoff mit einer Mittellage (4) aus Spanplatte und einer Faserplatte oder Schichtstoffplatte als Außenlage (2, 6) sowie mit einem zwischen Mittellage (4) und Außenlage (2, 6) angeordneten kunstharzgetränkten Papier (3, 5), wobei zwischen dem kunstharzgetränkten Papier (3, 5) und der Außenlage (2, 6) eine Schicht Klebstoff (11) angeordnet ist, **dadurch gekennzeichnet, dass** der Klebstoff (11) ein Schmelzkleber, insbesondere ein Polyurethanklebstoff oder ein Ethylenvinylacetatklebstoff ist.

2. Verbundplatte nach Anspruch 1, **dadurch gekennzeichnet, dass** zwei oder mehr kunstharzgetränkte Papiere (3, 5) auf der Mittellage (4) angeordnet sind [Seite 2, Zeilen 17, 18].

3. Verbundplatte nach Anspruch 1 oder 2, **dadurch gekennzeichnet, dass** das Blattgewicht eines einzelnen kunstharzgetränkten Papiers (3, 5) 80 g/m² bis 300 g/m² beträgt.

4. Verbundplatte nach mindestens einem der vorangehenden Ansprüche, **dadurch gekennzeichnet, dass** das Blattgewicht des zwischen Mittellage (4) und Außenlage (2, 6) angeordneten kunstharzgetränkten Papiers (3, 5) 200 g/m² bis zu 300 g/m² beträgt.

5. Verbundplatte nach mindestens einem der vorangehenden Ansprüche, **dadurch gekennzeichnet, dass** 20 g/m² bis 200 g/m² Klebstoff (11) als Schicht aufgetragen werden.

6. Verbundplatte nach mindestens einem der vorangehenden Ansprüche, **dadurch gekennzeichnet, dass** das kunstharzgetränkte Papier (3, 5) mit einem oder mehreren der Kunstharze getränkt ist, aus der Gruppe, die Harnstoff, Melamin, Formaldehyd, Phenolharz, Epoxidharz sowie deren Mischungen und Derivate umfasst.

7. Verbundplatte nach mindestens einem der vorangehenden Ansprüche, **dadurch gekennzeichnet, dass** das kunstharzgetränkte Papier (3, 5) ein Additiv aufweist, das ein Entflammen oder Brennen der Verbundplatte (1) erschwert oder verhindert.

8. Verbundplatte nach mindestens einem der vorangehenden Ansprüche, **dadurch gekennzeichnet, dass** die Mittellage (4) auf beiden Seiten mit einer Außenlage (2, 6), einem kunstharzgetränkten Papier (3, 5) und einer Schicht aus Klebstoff (11) versehen ist.

9. Verbundplatte nach mindestens einem der vorangehenden Ansprüche, **dadurch gekennzeichnet, dass** die Außenlage (2, 6) eine Platte aus mitteldichter oder aus hochdichter Faserplatte, insbesondere eine compact-density-fiberboard (CDF-) Platte aufweist.

10. Verbundplatte nach mindestens einem der vorangehenden Ansprüche, **dadurch gekennzeichnet, dass** auf die Außenseite (9) mindestens einer Außenlage (2, 6) eine weitere Beschichtung aufgebracht ist.

11. Verbundplatte nach mindestens einem der vorangehenden Ansprüche, **dadurch gekennzeichnet, dass** als weitere Beschichtung auf die Außenseite (9) mindestens einer Außenlage (2, 6) eine Beschichtung aus der Gruppe aufgebracht ist, die, einzeln oder in Kombination, umfasst: Farbe, Lack, Hochdrucklaminat, Furnier, Papier, Karton, Tapete, Folie, Textilien, Stoff, Filz, Vinyl, Leder, Kork, Stein, Metalle, Metallfolien, Kunststoffbeschichtungen, Polypropylen-, Polyethylen- oder Polyvinylacetatbeschichtungen, keramische Beschichtungen, Kacheln, Keramik-Kunstharzgemische, Glas, beschreibbare Folien, magnetische Beschichtungen, strahlungshemmende Folien oder Platten, mineralische Gewebe, organische, anorganische und synthetische Fasern.

12. Verfahren zum Herstellen einer Verbundplatte (1) aus Holzwerkstoff nach Anspruch 1 mit den Schritten:
- Zusammenstellen eines Pressgutstapels, aufweisend eine Mittellage (4) und mindestens ein kunstharzgetränktes Papier (3, 5),
- Verpressen des Pressgutstapels unter Anwendung von erhöhtem Druck und erhöhter Temperatur zu einer Verbundplatte (1),
- Aufbringen einer Schicht aus Klebstoff (11) auf das kunstharzgetränkte Papier (3, 5) und
- Kaschieren einer Faserplatte oder einer Schichtstoffplatte auf die Schicht aus Klebstoff (11).

13. Verfahren zum Herstellen einer Verbundplatte (1) aus Holzwerkstoff nach Anspruch 12, **dadurch gekennzeichnet, dass** der Pressgutstapel mehr als ein kunstharzgetränktes Papier (3, 5) aufweist.

14. Verfahren zum Herstellen einer Verbundplatte (1) aus Holzwerkstoff nach Anspruch 12 oder 13, **dadurch gekennzeichnet, dass** auf die Faserplatte oder Schichtstoffplatte eine weitere Beschichtung aufgebracht wird.

## Claims

1. A composite board composed of wood-based material, with a core layer (4) composed of particle board and a fiberboard or laminated board as an outer layer (2, 6) and with a synthetic resin-impregnated paper (3, 5) arranged between the core layer (4) and the outer layer (2, 6), wherein a layer of adhesive (11) is arranged between the synthetic resin-impregnated paper (3, 5) and the outer layer (2, 6), **characterized in that** the adhesive (11) is a hot melt adhesive, in particular a polyurethane adhesive or an ethylene vinyl acetate adhesive.

2. The composite board according to claim 1, **characterized in that** two or more synthetic resin-impregnated papers (3, 5) are arranged on the core layer (4) [page 2, lines 17, 18].

3. The composite board according to claim 1 or 2, **characterized in that** the basis weight of an individual synthetic resin-impregnated paper (3, 5) is 80 g/m² to 300 g/m².

4. The composite board according to at least one of the preceding claims, **characterized in that** the basis weight of the synthetic resin-impregnated paper (3, 5) arranged between the core layer (4) and the outer layer (2, 6) is 200 g/m² to 300 g/m².

5. The composite board according to at least one of the preceding claims, **characterized in that** 20 g/m² to 200 g/m² of adhesive (11) is applied as a layer.

6. The composite board according to at least one of the preceding claims, **characterized in that** the synthetic resin-impregnated paper (3, 5) is impregnated with one or more of the synthetic resins from the group which comprises urea, melamine, formaldehyde, phenolic resin, epoxy resin and mixtures and derivatives thereof.

7. The composite board according to at least one of the preceding claims, **characterized in that** the synthetic resin-impregnated paper (3, 5) has an additive which makes it difficult or impossible to ignite or burn the composite board (1).

8. The composite board according to at least one of the preceding claims, **characterized in that** the core layer (4) is provided on both sides with an outer layer (2, 6), a synthetic resin-impregnated paper (3, 5) and a layer of adhesive (11).

9. The composite board according to at least one of the preceding claims, **characterized in that** the outer layer (2, 6) comprises a board composed of medium-density or high-density fiberboard, in particular a compact-density fiberboard (CDF) board.

10. The composite board according to at least one of the preceding claims, **characterized in that** a further coating is applied to the outer face (9) of at least one outer layer (2, 6).

11. The composite board according to at least one of the preceding claims, **characterized in that** a coating from the group which comprises individually or in combination: paint, lacquer, high-pressure laminate, veneer, paper, cardboard, wallpaper, film, textiles, fabric, felt, vinyl, leather, cork, stone, metals, metal fims, plastic coatings, polypropylene, polyethylene or polyvinyl acetate coatings, ceramic coatings, tiles, ceramic-synthetic resin mixtures, glass, writable films, magnetic coatings, anti-radiation films or boards, mineral fabrics, organic, inorganic and synthetic fibers, is applied as a further coating on the outer face (9) of at least one outer layer (2, 6).

12. A method for producing a composite board (1) composed of wood-based material according to claim 1, having the steps:
- assembling a stack of material to be pressed, comprising a core layer (4) and at least one synthetic resin-impregnated paper (3, 5),
- pressing the stack of material to be pressed by using increased pressure and increased temperature to form a composite board (1),
- applying a layer of adhesive (11) onto the synthetic resin-impregnated paper (3, 5), and
- laminating a fiberboard or a laminated board onto the layer consisting of adhesive (11).

13. The method for producing a composite board (1) composed of wood-based material according to claim 12, **characterized in that** the stack of material to be pressed comprises more than one synthetic resin-impregnated paper (3, 5).

14. The method for producing a composite board (1) composed of wood-based material according to claim 12 or 13, **characterized in that** a further coating is applied to the fiberboard or laminated board.

## Revendications

1. Panneau composite en matériau dérivé du bois avec une couche médiane (4) en panneau aggloméré et un panneau de fibres ou un panneau stratifié comme couche externe (2, 6), ainsi qu'avec un papier (3, 5) imprégné de résine synthétique disposé entre la couche médiane (4) et la couche externe (2, 6), une couche d'adhésif (11) étant disposée entre le papier imprégné de résine synthétique (3, 5) et la couche externe (2, 6), **caractérisé en ce que** l'adhésif (11) est une colle fusible, en particulier un adhésif de polyuréthane ou un adhésif d'éthylène-acétate de vinyle.

2. Panneau composite selon la revendication 1, **caractérisé en ce que** deux ou plusieurs papiers imprégnés de résine synthétique (3, 5) sont disposés sur la couche médiane (4) [page 2, lignes 17, 18].

3. Panneau composite selon la revendication 1 ou 2, **caractérisé en ce que** le grammage d'un seul papier imprégné de résine synthétique (3, 5) est dans la plage de 80 g/m² à 300 g/m².

4. Panneau composite selon au moins l'une des revendications précédentes, **caractérisé en ce que** le grammage du papier imprégné de résine synthétique (3, 5) disposé entre la couche médiane (4) et la couche externe (2, 6) est dans la plage de 200 g/m² à 300 g/m².

5. Panneau composite selon au moins l'une des revendications précédentes, **caractérisé en ce que** de 20 g/m² à 200 g/m² d'adhésif (11) sont appliqués en tant que couche.

6. Panneau composite selon au moins l'une des revendications précédentes, **caractérisé en ce que** le papier imprégné de résine synthétique (3, 5) est imprégné d'une ou plusieurs résines synthétiques parmi le groupe se composant de : urée, mélamine, formaldéhyde, résine phénolique, résine époxyde, ainsi que de leurs mélanges et produits dérivés.

7. Panneau composite selon au moins l'une des revendications précédente, **caractérisé en ce que** le papier imprégné de résine synthétique (3, 5) présente un additif entravant ou empêchant une inflammation ou une combustion du panneau composite (1).

8. Panneau composite selon au moins l'une des revendications précédentes, **caractérisé en ce que** la couche médiane (4) est munie sur les deux côtés d'une couche externe (2, 6), d'un papier imprégné de résine synthétique (3, 5) et d'une couche d'adhésif (11).

9. Panneau composite selon au moins l'une des revendications précédente, **caractérisé en ce que** la couche externe (2, 6) présente un panneau en panneau de fibres à moyenne densité ou à haute densité, en particulier un panneau de fibres de densité compacte (CDF).

10. Panneau composite selon au moins l'une des revendications précédentes, **caractérisé en ce qu'**un revêtement supplémentaire est appliqué sur le côté externe (9) d'au moins une couche externe (2, 6).

11. Panneau composite selon au moins l'une des revendications précédentes, **caractérisé en ce que** le revêtement appliqué comme revêtement supplémentaire sur le côté externe (9) d'au moins une couche externe (2, 6) appartient au groupe se composant des éléments suivants, individuellement ou en combinaison : peinture, laque, stratifié haute pression, placage, papier, carton, papier peint, film, textiles, étoffe, feutre, vinyle, cuir, liège, pierre, métaux, feuilles métalliques, revêtements en matière plastique, revêtements en polypropylène, en polyéthylène ou en acétate de polyvinyle, revêtements céramiques, carreaux, mélanges céramique-résine synthétique, verre, films inscriptibles, revêtements magnétiques, films ou panneaux anti-rayonnement, tissus minéraux, fibres organiques, anorganiques et synthétiques.

12. Procédé pour la fabrication d'un panneau composite (1) en matériau dérivé du bois selon la revendication 1, avec les étapes :
- réalisation d'une pile de matériau de pressage, présentant une couche médiane (4) et au moins un papier imprégné de résine synthétique (3, 5),
- pressage de la pile de matériau de pressage par application d'une pression élevée et d'une température élevée à un panneau composite (1),
- application d'une couche d'adhésif (11) sur le papier imprégné de résine synthétique (3, 5) et
- contrecollage d'un panneau de fibres ou d'un panneau stratifié sur la couche d'adhésif (11).

13. Procédé pour la fabrication d'un panneau composite (1) en matériau dérivé du bois selon la revendication 12, **caractérisé en ce que** la pile de matériau de pressage présente plus d'un papier imprégné de résine synthétique (3, 5).

14. Procédé pour la fabrication d'un panneau composite (1) en matériau dérivé du bois selon la revendication 12 ou 13, **caractérisé en ce qu'**un revêtement supplémentaire est appliqué sur le panneau de fibres ou sur le panneau stratifié.
